# FASCICULE DE BREVET EUROPEEN

(11) **EP 0 920 749 B1**
(45) Date de publication et mention de la délivrance du brevet: **21.02.2007**
(21) Numéro de dépôt: 98917269.7
(22) Date de dépôt: 27.03.1998
(51) Int. Cl.: H04B 7/26

(54) **PROCEDE DE TRANSMISSION AMRT SUR UNE PLURALITE DE FREQUENCES PORTEUSES: SIGNAL ET RECEPTEUR CORRESPONDANTS**
TDMA-ÜBERTRAGUNGSVERFAHREN AUF MEHREREN TRÄGERFREQUENZEN: ENTSPRECHENDE SIGNALE UND EMPFÄNGER
METHOD FOR TDMA TRANSMISSION ON A PLURALITY OF CARRIER FREQUENCIES, CORRESPONDING SIGNAL AND RECEIVER

(30) Priorité: 28.03.1997 FR 9703891
(43) Date de publication de la demande: 09.06.1999
(73) Titulaire: ALCATEL, 75008 Paris (FR)
(72) Inventeur: BOUSQUET, Jacques, F-78290 Croissy sur Seine (FR)
(74) Mandataire: Smith, Bradford Lee
(86) Numéro de dépôt international: PCT/FR1998/000642
(87) Numéro de publication internationale: WO 1998/044657

(56) Documents cités:
- EP-A- 0 329 997
- WO-A-91/13502
- WO-A-92/10885
- WO-A-93/22849
- WO-A-95/12936
- WO-A-95/29562
- GB-A- 2 294 845
- US-A- 5 581 548

## Description

Le domaine de l'invention est celui de la transmission de signaux à l'aide d'une pluralité de fréquences porteuses, selon une technique d'accès AMRT (accès multiplexé par répartition dans le temps, ou TDMA en anglais).

Plus précisément, l'invention concerne la transmission des données de signalisation dans de tels systèmes.

L'invention trouve des applications dans de très nombreux domaines. Par exemple, elle peut être mise ne oeuvre pour la réalisation de transmission de données via satellites vers des sites isolés et/ou difficiles d'accès, et plus généralement dans tous les cas de réseaux d'accès, notamment mobiles.

Des systèmes AMRT multiporteuse sont déjà connus. Classiquement, les signaux sont organisés en trames, constituées chacune d'un nombre prédéterminé (par exemple 16) d'intervalles de temps (ou "slots" en anglais). Dans ces systèmes connus, l'un des intervalles de temps de chaque trame, classiquement le premier, est réservé à la transmission de la signalisation.

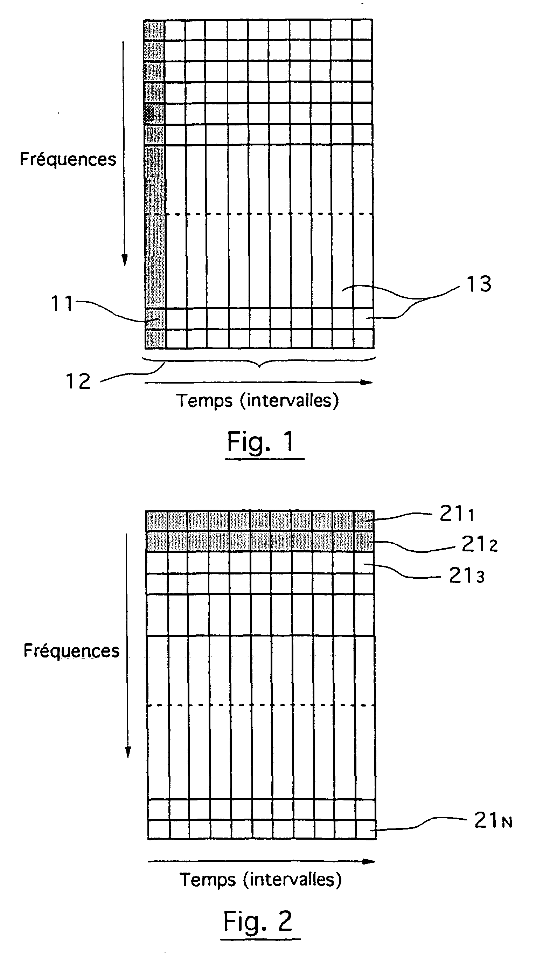

La figure 1 illustre la structure correspondante du signal. Chaque intervalle de temps 11 de chaque trame 12 est alloué dans son intégralité (c'est à dire pour toutes les porteuses) à la signalisation. Les autres intervalles de temps 13 sont dédiées à la transmission des données utiles.

Cette technique est relativement bien adaptée aux systèmes mettant en oeuvre un nombre limité de fréquences porteuses. En revanche, lorsque le système met en oeuvre un nombre important de porteuses (par exemple quelques centaines), on constate qu'elle aboutit à une perte élevée et inutile de capacité pour la transmission de l'information elle-même.

On conçoit en effet aisément que, par exemple, dans le cas d'un système mettant en oeuvre des trames de 16 intervalles de temps, il n'est pas nécessaire de disposer de 500 fréquences porteuses (ou plus) pour transmettre la signalisation toutes les 16 intervalles.

L'invention a notamment pour objectif de pallier cet inconvénient de l'état de la technique.

Plus précisément, un objectif de l'invention est de fournir un procédé de transmission AMRT multiporteuse, et un signal correspondant, qui optimise l'allocation des ressources de transmission entre les données de signalisation et les données porteuses d'information (ou données utiles).

Notamment, l'invention a pour objectif de fournir un tel procédé, qui soit bien adapté aux systèmes mettant en oeuvre un nombre élevé de fréquences porteuses.

Un autre objectif de l'invention est de fournir un tel procédé qui soit simple à mettre en oeuvre, au niveau de l'émission, et simple à exploiter au niveau de la réception.

Ainsi, l'invention a également pour objectif de fournir des récepteurs de signaux émis selon un tel procédé, qui soients simples et peu coûteux, et notamment qui ne rajoutent aucune complexité par rapport aux récepteurs de types connus.

Ces objectifs, ainsi que d'autres qui apparaîtront par la suite, sont atteints selon l'invention à l'aide d'un procédé de transmission AMRT mettant en oeuvre une pluralité de fréquences porteuses accessibles sélectivement, dans des récepteurs, par sauts de fréquence, ladite pluralité de fréquences porteuses comprenant :
- un premier jeu d'au moins une fréquence porteuse, exclusivement dédié à la transmission de données de signalisation ;
- un second jeu de fréquences porteuses, formé par l'ensemble des fréquences porteuses n'appartenant pas audit premier jeu, exclusivement dédié à la transmission de l'information utile.

En d'autres termes, l'invention repose sur une approche opposée à l'approche connue : au lieu de considérer une répartition temporelle de la signalisation, on propose une approche dans le domaine fréquentiel.

Cette technique permet d'introduire une grande souplesse, notamment lorsque le nombre de fréquences porteuses est élevé. Cette technique s'avère avantageuse en effet dès lors que le nombre de fréquences porteuses formant ledit premier jeu est inférieur ou égal au nombre d'intervalles de temps formant les trames transmises.

Par ailleurs, le fait qu'une ou plusieurs fréquences porteuses soient en permanence associées à des données de signalisation simplifie le fonctionnement des récepteurs, notamment dans la phase d'initialisation de la communication.

Lesdites fréquences porteuses formant ledit premier jeu peuvent être regroupées ou non, et placées à des emplacements quelconques.

L'invention concerne également les récepteurs de signaux émis selon le procédé décrit ci-dessus. Ces récepteurs comprennent notamment des moyens de sélection de l'une des fréquences porteuses formant ladite pluralité de fréquences porteuses assurant :
- à des instants précisés par lesdites données de signalisation, la fréquence porteuse dudit second jeu portant des données utiles qui lui sont destinées ; et
- le reste du temps, la fréquence porteuse appartenant audit premier jeu qui
- lui est assignée, de façon à obtenir lesdites données de signalisation.

L'invention concerne encore la structure du signal AMRT produit notamment dans le cadre de ce procédé.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, dans lesquels :
- la figure 1 illustre la structure d'un signal AMRT multiporteuse de type connu commentée en préambule ;
- la figure 2 présente la structure d'un signal AMRT multiporteuse selon l'invention, dans lequel deux fréquences porteuses sont réservées à la transmission de la signalisation.

La structure du signal selon l'invention est donc illustrée en figure 2. Il comprend N fréquences porteuses 21₁ à 21_{N} (par exemple N = 500), dont n (par exemple n = 2) 21₁ et 21₂ sont réservées en permanence à la signalisation.

Les avantages de cette technique sont nombreux. En particulier, il est possible d'adapter précisément la quantité de ressource nécessaire pour la signalisation en choisissant le nombre n correspondant. Classiquement, n vaut une ou quelques porteuses mais reste très petit devant N.

Si l'on considère le cas d'un signal organisé en trames de P intervalles de temps (par exemple P = 16), on constate que la technique de l'invention est très rapidement avantageuse, à savoir dès que : n /N < 1/P.

Le gain est très appréciable, par exemple dans le cas où P=16, N=500 et n=3. Les ressources allouées à la signalisation sont alors d'un taux de :
- 1/P = 1/16, selon la technique classique ;
- n/N = 3/500 selon l'invention,
soit un gain de l'ordre de 10.

Par ailleurs, cette technique est simple à mettre en oeuvre, dans les récepteurs. En effet, ceux-ci se positionnent tout d'abord sur une porteuse 21₁ en continu, jusqu'à trouver une information de signalisation qui les concerne.

Ensuite, ils se positionnent par saut de fréquence sur la ou les porteuses précisées par la signalisation pour recevoir les données qui leur sont destinées. Puis ils viennent se positionner sur la fréquence porteuse adéquate de signalisation, pour obtenir les informations de signalisation nécessaire.

## Revendications

1. Procédé de transmission AMRT mettant en oeuvre une pluralité de fréquences porteuses (21₁ à 21_{N}) accessibles sélectivement, dans des récepteurs, par sauts de fréquence,
**caractérisé en ce que** ladite pluralité de fréquences porteuses comprend :
- un premier jeu d'au moins une fréquence porteuse (21₁ à 21₂), exclusivement dédié à la transmission de données de signalisation ;
- un second jeu de fréquences porteuses (21₃ à 21_{N}), formé par l'ensemble des fréquences porteuses n'appartenant pas audit premier jeu, exclusivement dédié à la transmission de l'information utile.

2. Procédé selon la revendication 1, **caractérisé en ce que** le nombre de fréquences porteuses (21₁ à 21₂) formant ledit premier jeu est inférieur ou égal au nombre d'intervalles de temps formant les trames transmises.

3. Récepteur de signaux émis selon un procédé de transmission AMRT mettant en oeuvre une pluralité de fréquences porteuses accessibles sélectivement, dans des récepteurs, par sauts de fréquence,
dans lequel ladite pluralité de fréquences porteuses comprend :
- un premier jeu d'au moins une fréquence porteuse (21₁ à 21₂), exclusivement dédié à la transmission de données de signalisation ; et
- un second jeu de fréquences porteuses (21₃ à 21_{N}), formé par l'ensemble des fréquences porteuses n'appartenant pas audit premier jeu, exclusivement dédié à la transmission de l'information utile,
**caractérisé en ce qu'**il comprend des moyens de sélection de l'une des fréquences porteuses formant ladite pluralité de fréquences porteuses assurant :
- à des instants précisés par lesdites données de signalisation, la fréquence porteuse dudit second jeu portant des données utiles qui lui sont destinées ; et
- le reste du temps, la fréquence porteuse appartenant audit premier jeu qui lui est assignée, de façon à obtenir lesdites données de signalisation.

4. Signal AMRT formé d'une pluralité de fréquences porteuses portant des données utiles destinées à être reçues sélectivement par une pluralité de récepteur,
**caractérisé en ce que** ladite pluralité de fréquences porteuses comprend :
- un premier jeu d'au moins une fréquence porteuse (21₁ à 21₂), exclusivement dédié à la transmission de données de signalisation ;
- un second jeu de fréquences porteuses (21₃ à 21_{N}), formé par l'ensemble des fréquences porteuses n'appartenant pas audit premier jeu, exclusivement dédié à la transmission de l'information utile.

## Claims

1. A TDMA transmission method employing a plurality of carrier frequencies (21₁ through 21_{N}) accessible selectively in receivers by frequency hopping, **characterized in that** said plurality of carrier frequencies comprises:
- a first set of at least one carrier frequency (21₁ through 21₂) exclusively dedicated to transmitting signalling data, and
- a second set of carrier frequencies (21₃ through 21_{N}) formed of the set of carrier frequencies that do not belong to said first set and exclusively dedicated to transmitting payload information.

2. A method according to claim 1, **characterized in that** the number of carrier frequencies (21₁ through 21₂) forming said first set is less than or equal to the number of time slots forming the frames transmitted.

3. A receiver for signals transmitted by a TDMA transmission method using a plurality of carrier frequencies selectively accessible in receivers by frequency hopping, in which receiver said plurality of carrier frequencies comprise:
- a first set of at least one carrier frequency (21₁ through 21₂) exclusively dedicated to transmitting signalling data, and
- a second set of carrier frequencies (21₃ through 21_{N}) formed of the set of carrier frequencies that do not belong to said first set and exclusively dedicated to transmitting payload information,
**characterized in that** it comprises means for selecting one of the carrier frequencies forming said plurality of carrier frequencies adapted to select:
- at times specified by said signalling data, the carrier frequency of said second set carrying payload data addressed to it, and
- otherwise, to obtain said signalling data, the carrier frequency belonging to said first set that is assigned to it.

4. A TDMA signal made up of a plurality of carrier frequencies carrying payload data adapted to be selectively received by a plurality of receivers, **characterized in that** said plurality of carrier frequencies comprises:
- a first set of at least one carrier frequency (21₁ through 21₂) exclusively dedicated to transmitting signalling data, and
- a second set of carrier frequencies (21₃ through 21_{N}) formed of the set of carrier frequencies that do not belong to said first set and exclusively dedicated to transmitting payload information.

## Patentansprüche

1. TDMA-Übertragungsverfahren unter Nutzung einer Vielzahl von Trägerfrequenzen (21₁ bis 21_{N}), auf die in Empfängern selektiv durch Frequenzsprünge zugegriffen werden kann,
**dadurch gekennzeichnet, dass** die Vielzahl von Trägerfrequenzen umfasst:
- einen ersten Satz mit mindestens einer Trägerfrequenz (21₁ bis 21₂), der ausschließlich für die Übertragung von Signalisierungsdaten bestimmt ist;
- einen zweiten Satz Trägerfrequenzen (21₃ bis 21_{N}), der von sämtlichen nicht zum ersten Satz gehörenden Frequenzen gebildet wird und der ausschließlich für die Übertragung der Nutzinformation bestimmt ist.

2. Verfahren nach Anspruch 1, **dadurch gekennzeichnet, dass** die Anzahl der Trägerfrequenzen (21₁ bis 21₂), die den ersten Satz bilden, keiner oder gleich der Anzahl der Zeitschlitze ist, die die übertragenen Datenrahmen bilden.

3. Empfänger für Signale, die nach einem TDMA-Verfahren übertragen werden, welches eine Vielzahl von Trägerfrequenzen nutzt, auf die in Empfängern selektiv durch Frequenzsprünge zugegriffen werden kann,
bei dem die Vielzahl von Trägerfrequenzen umfasst:
- einen ersten Satz mit mindestens einer Trägerfrequenz (21₁ bis 21₂), der ausschließlich für die Übertragung von Signalisierungsdaten bestimmt ist; und
- einen zweiten Satz Trägerfrequenzen (21₃ bis 21_{N}), der von sämtlichen nicht zum ersten Satz gehörenden Frequenzen gebildet wird und der ausschließlich für die Übertragung der Nutzinformation bestimmt ist,
**dadurch gekennzeichnet, dass** er Mittel zur Auswahl einer der Trägerfrequenzen umfasst, welche die Vielzahl von Trägerfrequenzen bilden, wobei sichergestellt wird:
- zu von den Signalisierungsdaten exakt festgelegten Zeitpunkten die Trägerfrequenz des zweiten Satzes, der die für ihn [= den Empfänger] bestimmten Nutzdaten transportiert; und
- für die übrige Zeit die ihm zugewiesene, zum ersten Satz gehörende Trägerfrequenz, sodass die Signalisierungsdaten ermittelt werden.

4. TDAM-Signal, gebildet aus einer Vielzahl von Trägerfrequenzen, die Nutzdaten transportieren, welche dazu bestimmt sind, selektiv von einer Vielzahl von Empfängern empfangen zu werden,
**dadurch gekennzeichnet, dass** die Vielzahl von Trägerfrequenzen umfasst:
- einen ersten Satz mit mindestens einer Trägerfrequenz (21₁ bis 21₂), der ausschließlich für die Übertragung von Signalisierungsdaten bestimmt ist;
- einen zweiten Satz Trägerfrequenzen (21₃ bis 21_{N}), der von sämtlichen nicht zum ersten Satz gehörenden Frequenzen gebildet wird und der ausschließlich für die Übertragung der Nutzinformation bestimmt ist.
